# EUROPEAN PATENT APPLICATION

(11) **EP 4 645 024 A1**
(43) Date of publication of application: **05.11.2025**
(21) Application number: 24173818.6
(22) Date of filing: 02.05.2024
(51) Int. Cl.: G05D 7/06

(54) **A FLOW CONTROL SYSTEM AND A METHOD FOR CONTROLLING FLUID FLOW IN A FLOW CONTROL SYSTEM**

(71) Applicant: IMI Hydronic Engineering International SA, 1262 Eysins (CH)
(72) Inventor: KROGH, Martin, 524 42 Ljung (SE); JILDEROS, Daniel, 507 34 Brämhult (SE)
(74) Representative: Zacco Sweden AB

(57) **Abstract**

A flow control system in which processing circuitry repeatedly performs control cycles for meeting a requested low flow rate which is lower than a minimum measurable flow rate. Each control cycle comprises: i) moving a closing member towards a closed position until it reaches a waiting position, ii) keeping the closing member in the waiting position, and then iii) moving the closing member to a measuring position, the time elapsed being t1, an estimated or calculated fluid volume V1 has pass through the valve body during t1, and then iv) maintaining the closing member at said measuring position while continuously integrating the measured flow rate over a second time period t2, thereby obtaining a measure of a second volume V2 of fluid flowing through the valve body during the second time period t2, and then v) determining that the cycle is completed when (V1 + V2)/(t1 + t2) equals said requested low flow rate.

## Description

### TECHNICAL FIELD

The present disclosure relates to a flow control system. In particular the present disclosure relates to a flow control system comprising a valve arrangement and a flow meter. The present disclosure also relates to a method for controlling fluid flow in such a flow control system.

### BACKGROUND ART

Flow measurements may be implemented in a multitude of different instances. For instance, in manufacturing or processing industries it may be relevant to have control of the flow of a certain fluid flowing through a conduit. Another example is tap water control. A further example is in HVAC applications (heating, cooling, ventilation, and air conditioning), in which for example the temperature in a room or other enclosed space may be controlled in order to provide a comfortable indoor climate. The flow rate of a heating or cooling medium may be regulated by means of one or more valves to achieve the desired effect. Flow measurements may suitably be performed and the results thereof may, for instance, be used as feedback for the regulation of a valve or for calibration of a valve, etc.

However, the benefits of different flow meters may vary. For example, some flow meters may have the advantage of being available at low cost, but may then have the disadvantage of having a relatively low Turndown Ratio. For example, if a flow meter has a 50:1 turndown ratio, then the flow meter is capable of accurately measuring down to one 50^{th} of the maximum flow. If a flow meter has a 30:1 turndown ratio, then the flow meter is only capable of accurately measuring down to one 30^{th} of the maximum flow, etc. For a valve which is regulated based on feedback from a flow meter, a relatively low Turndown Ratio of the flow meter means that the minimum controllable flow for the valve will be relatively high. Thus, when low flow rates are desired through the valve, it is difficult to achieve such low flow rates with satisfactory accuracy.

### SUMMARY OF THE INVENTION

An object of the present disclosure is to provide a flow control system and a method which alleviate the above-mentioned drawbacks. This and other objects, which will become apparent in the following, are accomplished by a flow control system of claim and a method as defined in the accompanying independent claims. Some non-limiting examples are presented in the dependent claims.

The present inventive concept is based on the insight that a requested low flow rate, which is lower than a minimum measurable flow rate of a flow meter, may be provided by pulsing a flow in cycles so that an average flow rate level is obtained which corresponds to the requested flow rate. In particular, the present inventive concept is based on the insight that, when performing such repeated pulsing, the duty cycle may be kept to a substantially fixed time, whereas the period length is changed based on real-time measurement. In particular, the period length can be changed based on real-time measurement with respect to the part of the cycle at which the flow rate is equal to or higher than said minimum measurable flow rate. This allows for a reliable and accurate flow control even for low flow rates.

According to a first aspect of the present disclosure, there is provided a flow control system, comprising:
- a valve arrangement comprising a valve body having an inlet and an outlet, and a closing member movable within the valve body and configured to control fluid flow from the inlet to the outlet, wherein the closing member is movable to:
   different open positions for providing different flow rates of the fluid flowing through the valve body from the inlet to the outlet, and
   a closed position, in which no fluid, or only a leakage fluid, is allowed to flow from the inlet to the outlet,
- a flow meter configured to measure the flow rate of the fluid flowing through the valve body, wherein a minimum measurable flow rate is predefined for the flow meter, such that any measurements by the flow meter at lower flow rates than said minimum measurable flow rate are determined to be inaccurate,
- processing circuitry configured to receive, from the flow meter, information representative of the measured flow rate, wherein the processing circuitry is configured to control the position of the closing member based on the received information, wherein the processing circuitry is configured to receive a request for a requested low flow rate, which requested low flow rate is lower than said minimum measurable flow rate,
wherein the processing circuitry is configured to repeatedly perform control cycles in which the closing member is controlled so that an average flow rate of the fluid through the valve body substantially corresponds to said requested low flow rate, wherein each control cycle comprises:
i) controlling the closing member to be moved in a direction towards the closed position until it reaches a waiting position, then
ii) controlling the closing member to remain in the waiting position, and then
iii) controlling the closing member to be moved in a direction away from the closed position until it reaches a measuring position at which the flow rate is equal to or larger than said minimum measurable flow rate, wherein the total time elapsed for performing the steps i), ii) and iii) is a first time period t1, and wherein a first volume V1 of fluid is estimated or calculated to pass through the valve body during said first time period t1, wherein t1 and V1 are fixed values, then
iv) controlling the closing member to be maintained at said measuring position while continuously integrating the measured flow rate through the valve body over a second time period t2, thereby obtaining a measure of a second volume V2 of fluid flowing through the valve body during the second time period t2, wherein t2 and V2 are variable values, and then v) determining that the cycle is completed when (V1 + V2)/(t1 + t2) equals said requested low flow rate.

A technical benefit of the flow control system includes that it enables an accurate flow control even for flow meters having a low Turndown Ratio, i.e. the flow control system enables an accurate flow control below of requested flow rates which are lower than said predefined minimum measurable flow rate of the flow meter.

The present inventive concept is also much more accurate compared to for example a pulse width modulation (PWM) type of flow control. If you would implement PWM, you would vary the duty cycle as a percentage of the period length. Such PWM control relies on fixed estimations of the relationships between input and output. By instead controlling the second time period t2 based on real-time flow measurement, a control action with much more predictable behaviour is obtained.

The first listed action in the control cycle (i.e. controlling the closing member to be moved in a direction towards the closed position until it reaches a waiting position) as well as the third listed action in the control cycle (i.e. controlling the closing member to be moved in a direction away from the closed position until it reaches a measuring position at which the flow rate is equal to or larger than said minimum measurable flow rate) can be performed relatively quickly, and the volume of fluid passing through the valve body during these actions can therefore be conveniently estimated or calculated. The second listed action of the control cycle (controlling the closing member to remain in the waiting position) can be a known position of the control member and thus the volume of fluid passing through the valve body during this second action can conveniently be calculated (or estimated). In particular, if the duration of the second action is considerably longer than the duration of the first and the third action, the volume contribution of the first and the third action will be much lower. Hereby, the first volume V1 of the fluid passing through the valve body during the first time period t1 (i.e. during the three first actions of the control cycle) can be conveniently estimated or calculated. Furthermore, before setting up the flow control system, empirical tests may be made to determine the first volume V1 for said first time period t1.

Since the major part of the duration of time period t1 and the flow of volume V1 takes place when the closing member is in a position at which the flow meter cannot accurately measure the flow rate (or cannot at all measure the flow rate), it is an advantage to have these values fixed. In contrast, when having the closing member in the measuring position, i.e. a position at which the flow meter can accurately measure the flow rate, a real time measurement during a variable second time period t2 can advantageously be made and used for calculating the second volume V2 (integrating the measured flow rate Q2 over time, where Q2 is the measured flow rate at the measuring position). Such variable real time measurement can therefore be used for obtaining an average flow rate which corresponds to the requested low flow rate. Thus, when the sum of the first and the second volumes (V1 + V2) divided by the sum of the first and the second time periods (t1 + t2) equals the requested low flow rate, then the cycle can start from the beginning, i.e. once again controlling the closing member to be moved in a direction towards the closed position until it reaches the waiting position.

As mentioned above, the measuring position is a position at which the flow rate is equal to or larger than said minimum measurable flow rate. If the requested low flow rate is indeed very low, much lower than the minimum measurable flow rate, selecting the measuring position to be a position at which the flow rate is equal to the minimum measurable flow rate would work well. However, in cases in which the requested low flow rate is just slightly underneath the minimum requested flow rate, the duration of the second time period t2 would need to be very long if the measuring position is set to correspond to said minimum measurable flow rate. Therefore, in such cases, in order to have a more appropriate duration of the second time period t2, the measuring position can suitably be at a position at which the flow rate is higher than said minimum measurable flow rate. It follows that for convenience, it may be suitable to have a target flow rate which is higher than the minimum measurable flow rate by a predefined amount, and to have the measuring position corresponding to a position at which said target flow rate is reached, irrespectively of how low said requested low flow rate is. In this way, a reasonable duration of the second time period t2 can be achieved irrespectively of the level of said requested low flow rate.

It should be understood that the teachings of the present disclosure may be implemented for a linearly as well as rotatingly movable closing members. Thus, in some examples, the movement of the closing member may be a linear movement, such as along a geometrical axis of a valve spindle. In other examples, the movement of the closing member may be a rotary/angular movement, such as around a geometrical axis of a valve spindle.

The flow control system may advantageously be implemented for a valve arrangement intended for controlling the flow of a liquid, in particular water. The flow control system is particularly advantages for HVAC implementations.

As mentioned above the closing arrangement can be moved to different open positions, including a fully open position, and partially open positions (i.e. any position between the fully open position and the closed position). In the closed position, there might be a very small leakage flow, which however is negligible from a practical flow regulating perspective.

The teachings of the present disclosure may be applicable with any type of flow meter, but as should be understood from the above discussion, the teachings of this disclosure is particularly advantageous when implemented with respect to a flow meter which has a low Turndown Ratio. Purely as an illustrative example, the flow meter may be of a mechanical type in which an element can be moved by the flowing fluid, for example a circulating ball, an impeller, etc. Such mechanical elements may have a certain inertia that needs to be overcome by the flowing fluid, and therefore such flow meters may not be reliable at low flow rates.

The expression "processing circuitry" as used herein should be understood to include any type of computing device, such as a micro-processor, microcontroller, programmable digital signal processor or another programmable device. The processing circuitry may also, or instead, include an application specific integrated circuit (ASIC), a programmable gate array or programmable array logic, a programmable logic device, or a digital signal processor. Where it includes a programmable device such as the microprocessor, microcontroller or programmable digital signal processor mentioned above, the processor may further include computer executable code that controls operation of the programmable device. It should also be understood that the actual implementation of a processing circuitry may be divided between more than a single device/circuit. For instance, one device/circuit of the processing circuitry may control the communication with the flow meter, while another device/circuit of the processing circuitry may control the movement of the closing member, and a third device/circuit of the processing circuitry may calculate/determine when the cycle is completed. Of course, it is also conceivable that the processing circuitry has only one device/circuit which is used for all actions. Furthermore, the processing circuitry may be arranged in wireless or wired communication with other components, such as the flow meter, any actuator of the valve arrangement, input devices (including a Building Management System, BMS) from which a requested flow rate may be obtained, etc. In some examples, the processing circuitry may be provided as an integrated part of an actuator assembly which comprises both an actuator and the processing circuitry. Such an actuator assembly may thus be produced and delivered to customers as one device, which includes both the actuator and the integrated processing circuitry. Similarly, in some examples, the processing circuitry may be provided as an integrated part of a flow meter assembly which comprises both the flow meter and the processing circuitry. Such a flow meter assembly may thus be produced and delivered to customers as one device which includes both the flow meter and the integrated processing circuitry.

According to at least one example, the flow control system may further comprise a thermoelectric actuator operatively connected to the closing member, wherein the thermoelectric actuator comprises an expandable material element which is expandable in dependency of electric energy applied to the expandable material element, wherein expansion of the expandable material element causes the closing member to move in one of
a) a direction towards the closed position, or
b) a direction away from the closed position,
and wherein contraction of the expandable material element causes the closing member to move in the other one of said direction towards the closed position or said direction away from the closed position, wherein the processing circuitry is configured to control the position of the closing member by controlling the electric energy applied to the expandable material element.

A technical benefit may include that a thermoelectric actuator is quiet and does practically not become worn out by the repeated movements. This is a great advantage in relation when you want to repeatedly move the closing member towards and away from the closed position to achieve an average low flow rate. In contrast, a motorized actuator wears out and creates noise when moving.

In some examples, the thermoelectric actuator may be a normally open actuator. In such cases, expansion of the expandable material element causers the closing member to move towards the closed position, whereas contraction of the expandable material element causes the closing member to move away from the closed position. In other examples, the thermoelectric actuator may be a normally closed actuator. In such cases, expansion of the expandable material element causers the closing member to move away from the closed position, whereas contraction of the expandable material element causes the closing member to move towards the closed position.

A thermoelectric actuator may also be advantageous in normal operating mode, i.e. when the requested flow rate is higher than said minimum measurable flow rate of the flow meter. A thermoelectric actuator is stepless, thereby allowing for high accuracy to be obtained in such normal operating modes. As the thermoelectric actuator expands and contracts its expandable material element, it may suitably be connected to a linearly movable closing member (for example a linearly movable valve plug), although such a linear movement may by suitable mechanisms be translated into a rotary movement as well.

According to at least one example, the flow control system may further comprise a differential pressure regulator configured to limit variations of the differential pressure across the closing member when fluid is flowing through the valve body, the differential pressure regulator being in fluid communication with the fluid flow both upstream and downstream of the closing member. By including such a differential pressure regulator in the flow control system, which limits the variations of the differential pressure across the closing member, a substantially pressure independent control may be enabled. For such a pressure independent control, you have a known relation between the valve/actuator stroke and the flow rate (as long as a minimum drive/start pressure is available for the differential pressure regulator). Due to this known relationship, the flow measurement will stop to be accurate at substantially the same open position of the closing member every time, and therefore the time to go from that open position to the waiting position can be accurately estimated. In contrast, when using a system which is not pressure independent, then the differential pressure over the closing member will vary. This means that the position of the closing member at which the flow measurement stops to be accurate will be different depending on the pressure drop (i.e. the minimum measurable flow rate of the flow meter will coincide with different positions of the closing member depending on the pressure drop). If the flow control system is implemented without a differential pressure regulator, then variable transient behaviour when the closing member moves to and from the waiting position, may suitably be compensated for by having a longer duration in the waiting position. Having a relatively long duration at the waiting position reduces the impact of pressure variations and the varying flow rate on the estimations. Thus, a long duration at the waiting position (in particular if the waiting position is at the closed position) reduces the impact of the possibly varying flow volume when moving to/from the waiting position. Such movement to/from the waiting position is therefore suitably performed at a high speed, to further reduce the impact on the estimation/calculation of the first volume V1.

In some examples, the differential pressure regulator may be a mechanical differential pressure regulator. It may suitably be provided within the valve body. Such a mechanical differential pressure regulator may comprise a movable separating member (e.g. a membrane) having a first side which is in fluid communication with the fluid flow upstream of the closing member and an oppositely facing second side which is in fluid communication with the fluid flow downstream of the closing member, wherein the differential pressure regulator is configured such that the movable separating member is movable in response to a differential pressure between the first and second sides, and such that the movement of the movable separating member counteracts pressure variations across the closing member when fluid is flowing through the valve body.

In some examples, the differential pressure regulator may be an electrical differential pressure regulator. Such an electrical differential pressure regulator may, for example, suitably be provided externally of the valve body, and may suitably include a separate valve device which regulates the flow that reaches the inlet of the valve body of the valve arrangement.

According to at least one example, the measuring position may be the same for each cycle. This may be, particularly, advantageous in case the flow control system comprises a differential pressure regulator, as the flow rate at a given position of the closing member will be substantially the same each time. Thus, a predefined measuring position may conveniently be used for all events. Such a predefined measuring position may suitably be at a position of the closing member at which the flow rate (i.e. a target flow rate) is higher (by a predefined amount) than the minimum measurable flow rate. By appropriately selecting such a target flow rate for the measuring position, the control will be satisfactory irrespective of the magnitude of the requested low flow rate, in line with what has previously been discussed (in particular, a satisfactory duration of the second time period t2 can be achieved even for a requested low flow rate which is just underneath the minimum measurable flow rate).

According to at least one example, wherein said waiting position may be said closed position of the closing member. A technical benefit may include that the closer you set the waiting position to the closed position of the closing member, the smaller average flow rates can be controlled. By having the waiting position equal to the closing position, you can achieve extremely low requested low flow rates. A further advantage may be that it may be easier to find the waiting position if it is equal to said closed position (e.g. because in such case you are not dependent on tolerances in for example the actuator/control mechanism). It should, however, be noted that, even though a having the waiting position equal to said closed position may be advantageous, in other examples it would also be possible to have the waiting position in an open position, i.e. separated from the closed position. An advantage of having an open waiting position may be that you have a constant through flow, which allows for a more even total flow on a system level. The risk of causing negative effects for other valves along a pipe network, due to e.g. pressure fluctuations, may be reduced.

By having the closing member moving in a direction towards the closed position in a way that is the same for each cycle the fixed values of the first time period t1 and the first volume V1 can be good enough approximations in relation to actual time and volume values. Even in case the position of the closing member may vary with respect to the measuring position (e.g. in case of a pressure dependent system), i.e. the target flow rate will be obtained at slightly different opening positions of the closing member in different cycles, the approximations will be good enough. This is due to the possibility of moving the closing member quickly to/from the same waiting position each time, the actual time duration and the actual flown volume will be close enough to the fixed values t1 and V1, which can therefore satisfactorily be used by the processing circuitry for calculating the completion of the cycle.

According to at least one example, the said measuring position may be associated with a predetermined flow rate (such as a target flow rate), wherein when the processing circuitry receives information from the flow meter that said predetermined flow rate has been reached, then the processing circuitry determines that said measuring position is the position of the closing member at which the predetermined flow rate has been reached. This may be particularly suitable for cases in which the flow control system does not comprise a differential pressure regulator, wherefor the physical position of the closing member, at which the predetermined flow rate is achieved, may be different in different control cycles. Thus, the processing circuitry can make sure that the correct measuring position (i.e. the predetermined flow rate) is achieved without needing to check the actual physical position of the closing member.

According to at least one example, said first action in the control cycle, i.e. i) controlling the closing member to be moved in a direction towards the closed position until it reaches a waiting position, may be initiated when the closing member is located in said measuring position. This may be beneficial when changing from a high (measurable) requested flow rate to a requested low flow rate. A high requested flow rate which is properly measurable by the flow meter does not require the herein disclosed control cycle to be performed, since the information from the flow meter can be relied upon as being accurate for such high flow rates. However, when a request for change is made to a requested low flow rate which is below said minimum measurable flow rate of the flow meter, then the control cycle may suitably be initiated. In particular, the control cycle may suitably be initiated at the time when said measuring position is reached during the movement of the closing member in a direction towards the closed position. In other words, the point in time from which said first time period t1 is started for a first control cycle, may suitably be the point in time at which the measuring position is reached during said movement of the closing member in the direction towards the closed position.

According to at least one example, the first time period t1 may be in the range of 60 - 90 seconds. This may be advantageous for HVAC implementations in which it is desired to control the temperature by means of the flow control system. Such implementations are quite different from for example other more remote technologies, such as fuel injection systems for vehicles in which very short pulsating opening and closing of a valve may be provided.

According to at least one example, the second time period t2 may be in the range of 3 - 300 seconds. Allowing for such broad range is advantageous as the second time period t2 may vary depending on the value of the requested low flow rate. The higher the value (but lower than said minimum measurable flow rate), the longer the second time period t2.

According to a second aspect of the present disclosure, there is provided a method for controlling fluid flow in a flow control system which comprises:
- a valve arrangement comprising a valve body having an inlet and an outlet, and a closing member movable within the valve body and configured to control fluid flow from the inlet to the outlet, wherein the closing member is movable to:
   different open positions for providing different flow rates of the fluid flowing through the valve body from the inlet to the outlet, and
   a closed position, in which no fluid, or only a leakage fluid, is allowed to flow from the inlet to the outlet,
- a flow meter configured to measure the flow rate of the fluid flowing through the valve body, wherein a minimum measurable flow rate is predefined for the flow meter, such that any measurements by the flow meter at lower flow rates than said minimum measurable flow rate are determined to be inaccurate,
the method comprising:
- receiving, by processing circuitry, from the flow meter, information representative of the measured flow rate,
- receiving, by the processing circuitry, a request for a requested low flow rate, which requested low flow rate is lower than said minimum measurable flow rate,
- repeatedly performing, by the processing circuitry, control cycles in which the closing member is controlled so that an average flow rate of the fluid through the valve body substantially corresponds to said requested low flow rate, wherein each control cycle comprises:
   i) controlling, by the processing circuitry, the closing member to be moved in a direction towards the closed position until it reaches a waiting position, then
   ii) controlling, by the processing circuitry, the closing member to remain in the waiting position, and then
   iii) controlling, by the processing circuitry, the closing member to be moved in a direction away from the closed position until it reaches a measuring position at which the flow rate is equal to or larger than said minimum measurable flow rate, wherein the total time elapsed for performing the steps i), ii) and iii) is a first time period t1, and wherein a first volume V1 of fluid is estimated or calculated to pass through the valve body during said first time period t1, wherein t1 and V1 are fixed values, then
   iv) controlling, by the processing circuitry, the closing member to be maintained at said measuring position while continuously integrating the measured flow rate through the valve body over a second time period t2, thereby obtaining a measure of a second volume V2 of fluid flowing through the valve body during the second time period t2, wherein t2 and V2 are variable values, and then
   v) determining, by the processing circuitry, that the cycle is completed when (V1 + V2)/(t1 + t2) equals said requested low flow rate.

Technical benefits of the method of the second aspect may be largely analogous to the technical benefits of the flow control system of the first aspect, including any examples thereof. Furthermore, the various examples discussed with respect to the flow control system of the first aspect, may suitably also be implemented for the method of the second aspect.

Generally, all terms used in the claims are to be interpreted according to their ordinary meaning in the technical field, unless explicitly defined otherwise herein. All references to "a/an/the part, portion, element, component, arrangement, device, etc." are to be interpreted openly as referring to at least one instance of the part, portion, element, apparatus, component, arrangement, device, etc., unless explicitly stated otherwise. Further features of, and advantages with, the present inventive concept will become apparent when studying the appended claims and the following description. The skilled person realizes that different features of the present inventive concept may be combined to create embodiments other than those described in the following, without departing from the scope of the present inventive concept.

### BRIEF DESCRIPTION OF THE DRAWINGS

**Fig. 1** is a very schematic illustration of a flow control system according to at least one example of the present disclosure.
**Fig. 2** is a very schematic illustration of a flow control system according to at least a further example of the present disclosure.
**Fig. 3** is an illustration of a flow control system according to at least another example of the present disclosure.
**Fig. 4****.** is a group of graphs illustrating an example of, inter alia, the flow rate through a valve body when a processing circuitry performs control cycles in accordance with at least some examples of this disclosure.
**Fig. 5** is another group of graphs illustrating an example of, inter alia, the flow rate through a valve body when a processing circuitry performs control cycles in accordance with at least some examples of this disclosure.
**Fig. 6** is a schematic illustration of a method in accordance with at least some examples of this disclosure.

### DETAILED DESCRIPTION

The present inventive concept will now be described more fully hereinafter with reference to the accompanying drawings, in which certain aspects of the present inventive concept are shown. The present inventive concept may, however, be embodied in many different forms and should not be construed as limited to the embodiments and aspects set forth herein; rather, the embodiments are provided by way of example so that this disclosure will be thorough and complete, and will fully convey the scope of the invention to those skilled in the art. Accordingly, it is to be understood that the present inventive concept is not limited to the embodiments described herein and illustrated in the drawings; rather, the skilled person will recognize that many changes and modifications may be made within the scope of the appended claims. Like reference numerals refer to like elements throughout the description.

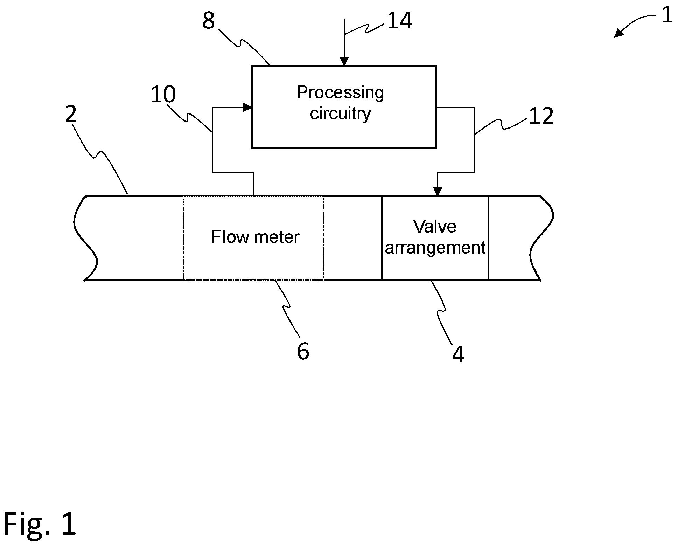

**Fig. 1** is a very schematic illustration of a flow control system **1** according to at least one example of the present disclosure. The flow control system **1** is here illustrated as being installed in a distribution pipe **2,** such as for distributing cooling or heating water in a building. The flow control system **1** comprises a valve arrangement **4.** The valve arrangement **4** may include the features discussed elsewhere in this disclosure. In particular, the valve arrangement **4** may comprise a valve body having an inlet and an outlet, and a closing member movable within the valve body and configured to control the fluid flow from the inlet to the outlet. In particular, the closing member is movable to different open positions for providing different flow rates of fluid flowing through the valve body from the inlet to the outlet, and a closed position, in which no fluid, or only a leakage fluid is allowed to flow from the inlet to the outlet. Hereby, the fluid flow through this illustrated part of the distribution pipe **2** can be controlled.

The flow control system **1** also comprises a flow meter **6** configured to measure the flow rate of the fluid flowing through the valve body of the valve arrangement **4.** A minimum measurable flow rate is predefined for the flow meter **6,** such that any measurements by the flow meter 6 at lower flow rates than said minimum measurable flow rate are determined to be inaccurate.

The flow control system **1** further comprises processing circuitry **8** configured to receive, from the flow meter **6,** information **10** representative of the measured flow rate. The processing circuitry **8** is also configured to control (e.g. by sending control instructions **12)** the position of the closing member of the valve arrangement **4** based on the received information **10.** Furthermore, the processing circuity **8** is configured to receive flow rate requests **14.** In particular, the processing circuitry **8** is configured to receive a request for a requested low flow rate, which requested low flow rate is lower than said minimum measurable flow rate. Upon receipt of such a requested low flow rate, the processing circuitry **8** may repeatedly perform control cycles in which the closing member of the valve arrangement **4** is controlled so that an average flow rate of the fluid through the valve body substantially corresponds to said requested low flow rate. Said control cycles may include pulsing the flow to obtain a desired average flow rate. Details of such control cycles will be discussed later. It should be understood that in case the processing circuitry **8** receives a request for a flow rate which is equal to or higher than said minimum measurable flow rate, then said processing circuitry **8** may operate in a normal operating mode, controlling the position of the closing member without any pulsing control.

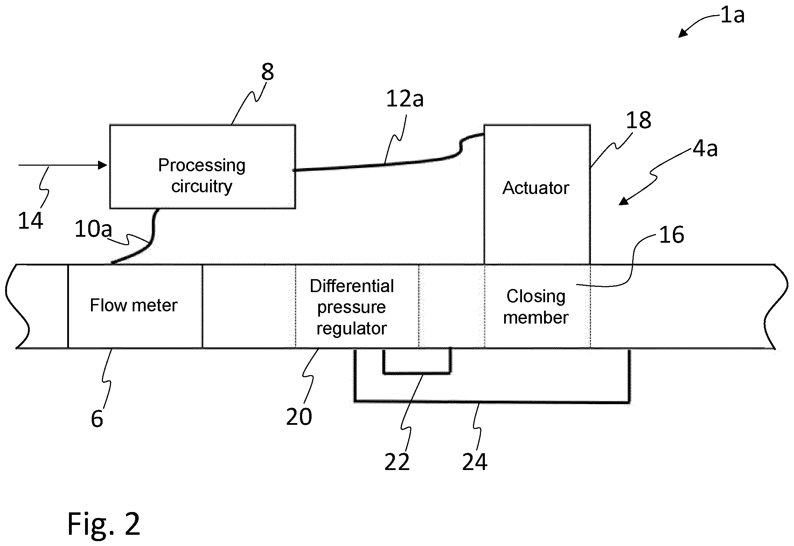

**Fig. 2** is a very schematic illustration of a flow control system **1a** according to at least a further example of the present disclosure.

The illustrated flow control system **1a** comprises a valve arrangement **4a,** which in turn may comprises a closing member **16** located within a valve body (the valve body is not specifically indicated in the schematic illustration of **Fig. 2****).** The closing member **16** may, for example be a linearly moveable valve plug or valve plate, or a rotatingly movable ball valve part. The closing member **16** can be arranged in different positions. One end position is a closed position in which fluid is prevented (or only a leak flow is allowed) to flow from an inlet of the valve body to an outlet of the valve body. Another end position is a fully opened position. The closing member **16** is movable between the two end positions, but can also be stopped in intermediate positions between the two end positions. The valve arrangement **4a** may also comprise an actuator **18.** The actuator **18** may be operatively connected or connectable to the closing member **16** for moving the closing member **16** to adjust the flow rate through the valve body. The actuator **18** may, for example, be a thermoelectric actuator operatively connected to the closing member **16.** Such a thermoelectric actuator may be configured and have the advantages discussed previously in this disclosure.

The flow control system **1a** may also comprise a differential pressure regulator **20** configured to limit variations of the differential pressure across the closing member **16** when fluid is flowing through the valve body. In this illustration, it is shown that the differential pressure regulator **20** may be arranged as an individual component outside the valve body, for example in its own housing. However, in other examples the differential pressure regulator **20** may be integrated within the valve body. In either case, as schematically illustrated in **Fig. 2****,** by a first and a second fluid passage **22, 24,** the differential pressure regulator **20** may be in fluid communication with the fluid flow upstream and downstream of the closing member **16,** respectively. The general direction of the fluid flow in **Fig. 2** is from left to right. The differential pressure regulator **20,** being in fluid communication both upstream and downstream of the closing member **16,** can compensate for pressure changes. The differential pressure regulator **20** strives to maintain a stable pressure difference across the closing member **16.** Advantages of including a differential pressure regulator **20** in the flow control system **1a** have been previously discussed in this disclosure and fully apply to the herein illustrated example and to other examples.

Similarly to the example in **Fig. 1****,** the flow control system **1a** of **Fig. 2** also comprises a flow meter **6** and processing circuitry **8.** The flow meter **6** is configured to measure the flow rate through the valve body. As already mentioned, in this illustration, the general flow direction is from left to right. The fluid flow will thus first pass along the flow meter **6,** then through the differential pressure regulator **20** and then after having passed along the closing member **16,** the fluid leaves the valve arrangement **4a.** In this exemplary embodiment, the flow meter **6** is arranged upstream of the differential pressure regulator **20** and the closing member **16.** This may be advantageous as it reduces the risk of disturbances in the flow, e.g. turbulence caused by the other components, which may affect the accuracy of the measurable range of the flow meter **6** if it is arranged close to the other components. Nevertheless, it is conceivable to arrange the flow meter **6** downstream of one or both of the other components, for example at a suitable distance so as to reduce the risk of flow disturbing effects. Furthermore, it is even conceivable to integrate the flow meter **6** in the valve body, i.e. in a common housing with the closing member **16,** suitably arranged in such way to reduce the risk of disturbances.

The processing circuitry **8** is configured to receive an input in the form of a flow rate request **14** representative of a desired flow rate through the valve body. The input may be received from a central controller, such as a building management system, or from a local device, such as a temperature-adjusting device in a room, or from a mobile device, such as a smart phone, or from a computer, etc. Thus, it should be understood that the processing circuitry **8** may be configured in various ways with various communication interfaces, including communication interface for wired and/or wireless communication. For example, the communication interface may be compatible with WiFi, Bluetooth, and other wireless communication standards or protocols.

The processing circuitry **8** is configured to receive another input in the form of information from the flow meter **6** representative of the measured flow rate. Although **Fig. 2** illustrates that said information may be provided via a first cable **10a** from the flow meter **6** to the processing circuitry **8,** thus indicating a wired communication, it should be understood that in other examples, the flow meter **6** may send the information wirelessly.

The processing circuitry **8** may, based on the received request flow rate request **14** and the received information from the flow meter, control the actuator **18** to move the closing member **16** or to maintain the closing member **16** in its position. Again, although **Fig. 2** illustrates a second cable **12a** between the processing circuitry **8** and the actuator **18,** thus indicating a wired communication, it should be understood that in other examples, the processing circuitry **8** may, in at least some examples, control the actuator **18** wirelessly. If the requested flow rate is within the measurable range of the flow meter **6,** then the processing circuitry **8** may control the actuator **18** in a normal manner, adjusting the closing member **16** to a new position if necessary. However, if the requested flow rate is below said minimum measurable flow rate of the flow meter **6,** then a pulse-like control cycle may be initiated by the processing circuitry, as will be explained later.

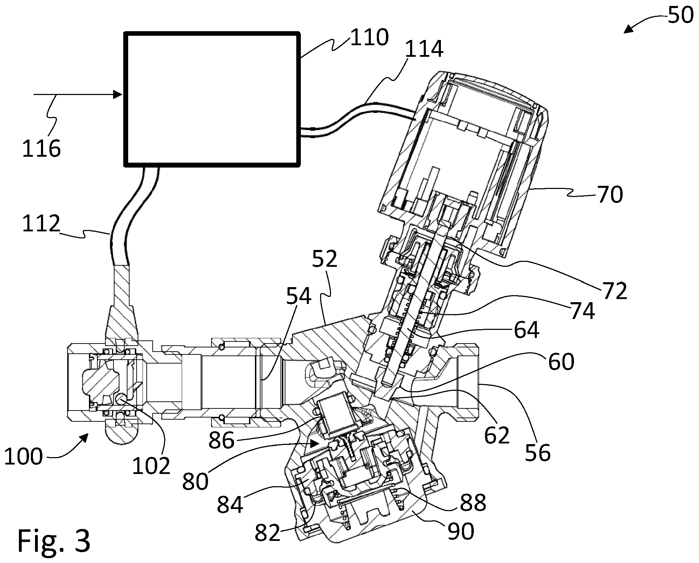

**Fig. 3** is an illustration of a flow control system **50** according to at least another example of the present disclosure.

Most of the components in **Fig. 3** are illustrated in cross-section. The flow control system **50** may be arranged in a pipe network. The pipe network may be part of a fluid distribution system such as in a building having a plurality of consumption points.

The flow control system **50** comprises a valve body **52** having an inlet **54** for receiving a fluid into the valve body **52,** and an outlet **56** for discharging fluid from the valve body **52.** Thus, a flow path extends through the valve body **52,** from the inlet **54** to the outlet **56.** The outlet **56** is located downstream of the inlet **54,** wherein the flow path is configured to guide a fluid from the inlet **54** to the outlet **56.** At the inlet **54** and the outlet **56,** the valve body **52** may be provided with internal threads to which external threads of other components of the valve arrangement **50,** or pipe sections of the pipe network, may be threaded. Alternatively, the valve body **52** may be provided with external threads, to which internal thread of components/pipe sections may be threaded.

A closing member in the form of a valve plug **60** is located within the valve body **52.** The valve plug **60** is movable between a closed position in which fluid is prevented (or only a leak flow is allowed) to flow from the inlet **54** to the outlet **56,** and a fully open position. The valve plug **60** may be moved to intermediate positions between said closed position and said fully open position, thereby allowing different flow rates to be passed through the valve body **52.** In the closed position, the valve plug **60** seals against a valve seat **62** within the valve body **52.** In different intermediate positions and in the fully opened position of the valve plug **60,** the valve plug **60** is separated from the valve seat **62,** and the available cross-sectional area for fluid flow between the valve plug **60** and the valve seat **62** increases as the valve plug **60** is moved from the closed position towards the fully opened position. The valve plug **60** may be connected to a valve stem **64** as illustrated in **Fig. 3****.**

An actuator **70** is operatively connected or connectable to the valve plug **60** for moving the valve plug **60** to adjust the flow rate through the valve body **52.** For instance, as illustrated in **Fig. 3****,** the actuator **70** may comprise an engagement part **72** which may push valve stem **64** and thus the valve plug **60** towards the valve seat **62.** A spring **74** located around the valve stem **74** may be biased to push the valve stem **64** and thereby the valve plug **60** in the opposite direction, i.e. in an opening direction. Thus, if no force is provided from the actuator **70** to the valve stem **64,** then the valve plug **60** will reach its fully opened position. This is generally referred to as a "normally open" type valve. It should, however, be understood that the general inventive concept may be applied also for "normally closed" type valves, i.e. in which valve plugs are in their closed position when no force from the actuator is applied (for example a pulling force).

From the above, it should be understood that the actuator **70** may suitably be configured to be able to move the valve plug **60** between the two end positions of the valve plug **60,** i.e. the closed position and the fully open position, and to intermediate positions between the two end positions.

A differential pressure regulator **80** is configured to limit variations of the differential pressure across the valve plug **60** when fluid is flowing through the valve body **52.** The differential pressure regulator **80** is in fluid communication with the fluid flow both upstream and downstream of the valve plug **60.** Unlike the example in **Fig. 2****,** in the present example in **Fig. 3****,** the differential pressure regulator **80** is provided within the valve body **52.** The differential pressure regulator **80** and the valve plug **60** may thus be provided in a common housing. However, it should be understood that in other exemplary embodiments, the illustrated valve plug **60** and actuator **70** could be combined with an external differential pressure regulator, which is provided as a separate component outside of the valve body **52** (but still being in fluid communication with the fluid flow both upstream and downstream of the valve plug **60).**

The illustrated differential pressure regulator **80** is just one example, and other types of differential pressure regulators are also conceivable. The illustrated differential pressure regulator **80** comprises a membrane **82.** The membrane **82** is fixed to a membrane support **84** which is connected to, and movable with a closing member **86.** A first side of the membrane **82** is in fluid communication with the fluid flow upstream of the valve plug **60,** whereby the fluid applies a first pressure to the membrane **82,** resulting in a first force which is the product of the first pressure and the area of the first side subjected to the first pressure. Similarly, an opposite second side of the membrane **82** is in fluid communication with the fluid flow downstream of the valve plug **60,** whereby the fluid applies a second pressure to the membrane **82,** resulting in a second force which is the product of the second pressure and the area of the second side subjected to the second pressure. Thus, a difference between the first and the second forces controls the movement of the membrane **82** and the membrane support **84** together with the closing member **86.**

As illustrated, a spring element **88** is arranged between a lid **90** arranged in the valve body **52** and the membrane support **84** for exerting a third force on at least a part of the membrane support **84.** Thus, the direction of the third force is at least partly the same as the direction of the second force, i.e. acting to open the closing member **86.** The closing member **86** will function as a differential pressure valve part, moving up or down to compensate for any differential pressure changes that might occur. The compensation results in a substantially unchanged differential pressure over the valve plug **60,** which functions as the control valve part. In other words, the differential pressure valve part may limit the differential pressure to which the control valve part is exposed. Therefore, the operating conditions for the control valve part may be maintained at an adequate level despite variations of the pressure level in the pipe network.

The flow control system **50** further comprises a flow meter **100** configured to measure the flow rate through the valve body. The flow meter **100** is here illustrated as being of a type in which a ball **102** is caused to circulate due to the kinetic energy of the fluid flow, and during the circulation it will temporarily block a light beam, wherein the frequency with which the light beam is blocked is a measure of the speed of the ball **102,** and thus a measure of the flow rate. However, this is just one example of a conceivable flow meter, and it should be understood that other types of flow meters are also conceivable.

The valve arrangement **50** further comprises processing circuitry **110,** here schematically illustrated as being in operative connection with both the actuator **70** and the flow meter **100.** The processing circuitry **110** in **Fig. 3** may have corresponding functionalities and may be configured to perform corresponding actions as the processing circuitry **8** in **Fig. 1** and **Fig. 2****.** In **Fig. 3****,** a first signal cable **112** connects the processing circuitry **110** with the flow meter **100.** A second signal cable **114** connects the processing circuitry **110** with the actuator **70.** Thus, the processing circuitry **110** is here illustrated as being in wired communication with both the flow meter **100** and the actuator **70,** however, it should be understood that the processing circuitry **110** may in other examples be arranged in wireless communication with one or both of the flow meter **100** and the actuator **70.** In other examples, the processing circuitry may be integrated with the actuator in a common actuator assembly, provided as one integral part. In other examples, processing circuitry may be integrated with the flow meter in a common flow meter assembly. Furthermore, this processing circuitry, as well as those discussed in connection with **Fig. 1** and **Fig. 2****,** may comprise or have access to an electronic memory, which may be a local or remote electronic memory. Such an electronic memory may for instance have various data stored, including for example the values of the first time period t1 and the first volume V1, that have been discussed previously in this disclosure.

Similarly, to the discussion in relation to **Fig. 1** and **Fig. 2****,** the processing circuitry **110** in **Fig. 3** is configured to receive a flow rate request **116** representative of a desired flow rate through the valve body **52.** Such a flow rate request **116** may be a wireless or wire-bound request. The processing circuitry **110** is also configured to receive, from the flow meter **100,** a flow input containing information representative of the measured flow rate (here via the first signal/data cable **112).** Thus, the processing circuitry **110** may receive various input signals, and may output a control signal.

It should be understood that any signal or signal cable discussed in the present disclosure may relate to a digital signal or an analogue signal. In either case the signal may carry data from one device to another device. For instance, the signal may be a logic signal that describes a bit stream; the signal may be a considered to be a sequence of codes represented by a physical quantity; the signal may refer to a time-varying voltage, current or electromagnetic wave that carries information, etc.

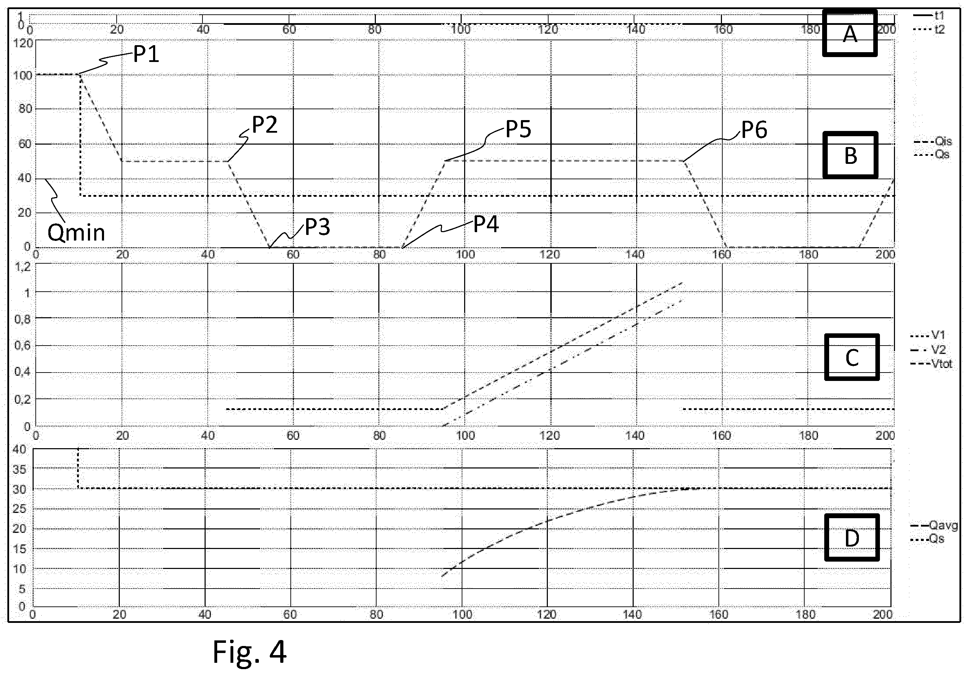

**Fig. 4** is a group of graphs illustrating an example of, inter alia, the flow rate through a valve body when a processing circuitry performs control cycles in accordance with at least some examples of this disclosure.

In a first graph A, the horizontal X-axis indicates elapsed time (seconds).

In a second graph **B,** the horizontal X-axis represents elapsed time, and the vertical Y-axis represents flow rate (litres per hour, l/h).

In a third graph **C,** the horizontal X-axis represents elapsed time, and the vertical Y-axis represents accumulated volume (litres).

In a fourth graph **D,** the horizontal X-axis represents elapsed time, and the vertical Y-axis represents average flow rate (l/h).

As mentioned above, the first graph **A,** indicates elapsed time. In particular, it shows when a first time period **t1** (solid line) and a second time period **t2** (dotted line) of a control cycle take place.

As understood from above, the second graph **B,** indicates flow rate as a function of time. In this example, the minimum measurable flow rate of a flow meter **Qmin** is 40 l/h. As has been discussed elsewhere in this disclosure, the processing circuitry is configured to receive requested flow rates. Curve **Qs** (dotted curve in second graph **B)** shows how the requested flow rate may vary over time, for example, due to a user or a building management system desiring another flow rate to be set. In this example, curve **Qs** illustrates that initially a normal flow rate has been requested (100 l/h), well above the minimum measurable flow rate **Qmin** (40 l/h). Here the processing circuitry may control the position of the closing member in normal way, positioning it at an opening degree at which the requested flow rate is achieved (as confirmed by the flow meter). However, later, at a point in time **P1,** the processing circuitry receives a request for a low flow rate, which is below the minimum measurable flow rate. In this example the value of the request for a low flow rate is 30 l/h. Now the processing circuitry will perform a control cycle in accordance with teachings disclosed herein. Curve **Qis** (dashed curve in second graph **B)** illustrates the actual flow rate through the valve body. Suitably, before starting the actual control cycle, the processing circuitry may first control the flow rate to be reduced by controlling the closing member to move to a position at which the flow rate has been reduced but still larger than said minimum measurable flow rate **Qmin** (in other examples it could be a position at which the flow rate is equal to said minimum measurable flow rate **Qmin).** The selected flow rate may suitably also correspond to the flow rate at the measuring position which will be used in the control cycle. In this case the selected flow rate is 50 l/h. By having a predetermined starting position before the control cycle starts, the herein discussed first volume **V1** can be accurately estimated/calculated. The processing circuitry subsequently initiates the control cycle at a point in time **P2.**

When the processing circuitry starts the control cycle at time **P2,** the first time period **t1** is started as shown in the first graph **A.**

As illustrated by a descending part of the curve **Qis** in the second graph **B,** the processing circuitry will now control the closing member to be moved in a direction towards the closed position until it reaches a waiting position. The waiting position is reached at a point in time **P3.** As mentioned previously in this disclosure, the waiting position may suitably be at the closed position of the closing member (as illustrated in the second graph **B,** since curve **Qis** has now reached 0 l/h), but it should be understood that slightly open positions of the closing member are also conceivable. The processing circuitry now controls the closing member to remain in the waiting position until a point in time **P4.** This remaining in the waiting position is shown by a straight horizontal part of curve **Qis.** Then, at point in time **P4,** the processing circuity controls the closing member to be moved in a direction away from the closed position until it reaches said measuring position at which the flow rate is equal to or larger than said minimum measurable flow rate **Qmin.** This is shown by an ascending part of curve **Qis.** As indicated, the closing member reaches said measuring position at a point in time **P5.** As already mentioned above, in this example the measuring position is selected to be 50 l/h, i.e. a flow rate larger than the minimum measurable flow rate **Qmin** (40 l/h).

The total time elapsed from said point in time **P2** to said point in time **P5** makes up said first time period **t1** (see first graph **A).** As can be seen from the third graph **C,** during the first time period **t1,** a first volume **V1** (dotted line in third graph **C)** of fluid is estimated or calculated to have passed through the valve body. Since the flow meter cannot be relied upon for providing accurate values during the first time period **t1,** therefore an estimation or calculation of the first volume **V1** is made, as previously discussed in this disclosure. Although the third graph **C** shows the accumulated volume as a function time, and although in practice there will be more flow through the valve body between time points **P2** and **P3** (and also between **P4** and **P5)** compared to between **P3** and **P4,** it is the estimated/calculated accumulated value at the end of time period **t1,** i.e. at point in time **P5** which is of interest. Therefore, the accumulated volume **V1** has, for simplicity, been illustrated as a straight line (although in reality it would be a stepped function if accurate measurements would have been possible with the flow meter in question).

The first time period **t1** and the first volume **V1** are fixed values as regards the repeatedly performing control cycles by the processing circuitry when controlling the flow rate to meet the presently requested low flow rate (in this example 30 l/h). From a practical point of view, **t1** and **V1** may suitably be fixed for any low flow rate request, i.e. irrespectively of if a new low flow rate request is later received by the processing circuitry. However, it should be understood that it may be conceivable to program the processing circuitry to allow for different fixed values for different requested low flow rates. For example, if the processing circuitry later receives another request for a low flow rate, the value of which is different from the value of the presently requested low flow rate, then the processing circuitry may set other fixed values for the first time period **t1** and first volume **V1** for the control cycles to reach the new requested low flow rate. Thus, it should be understood that the fixed values are fixed at least as regards the repeated control cycles performed by the processing circuitry to meet the most recently received low flow request, but if a new low flow request is received then new fixed values may be implemented by the processing circuitry.

At the completion of the first time period **t1,** the processing circuitry controls the closing member to be maintained at said measuring position (in this example 50 l/h). This is shown by a straight horizontal part of the curve **Qis** starting at point in time **P5** in the second graph **B.** As can be understood, the flow rate is now at a level at which the flow meter can provide accurate measurements to the processing circuitry. Therefore, while the processing circuitry controls the closing member to be maintained at said measuring position, the processing circuitry continuously integrates the measured flow rate through the valve body.

Since the processing circuitry is now receiving measurements from the flow meter it can now also obtain a measure of a second volume **V2** of flowing fluid through the valve body (the second volume **V2** is shown by the double-dot/dashed line in the third graph **C).** In particular, in the third graph **C,** it can be seen how the second volume **V2** rises while the closing member is maintained at the measuring position. In the third graph **C,** the total volume **Vtot** (dashed line) is also shown, i.e. **Vtot = V1** + **V2.** While the processing circuitry controls the closing member to be maintained at said measuring position, time passes and the volume **V2** is continuously accumulated, and therefore **Vtot** is also accumulated. The time that passes in this measuring position is said second time period **t2.** Both **t2** and **V2** are variable values.

Turning now to the fourth graph **D,** the requested low flow rate is shown by the curve **Qs** (dotted line) analogously to how it is shown in the second graph **B.** While the processing circuitry controls the closing member to be maintained at said measuring position, it calculates the average flow rate of the cycle as a function of time. In particular, the processing circuitry calculates average flow rate by taking the total volume **(V1 + V2)** divided by the total elapsed time **(t1 + t2).** This calculated average flow rate is illustrated by the curve **Qavg** (dashed curve) in the fourth graph **D.** Since the values of **t2** and **V2** will continuously increase as long as the closing member is maintained at said measuring position, the value of **Qavg** will also increase. When the calculated average flow rate **Qavg** has reached the value of the requested low flow rate **Qs,** then the processing circuitry determines that the cycle is completed. In the second graph **B** this completion is indicated at point in time **P6.** Thus, upon completion of the cycle, the second time period **t2** extended from said point in time **P5** to said point in time **P6.**

Then, starting at point in time **P6,** the processing circuitry initiates a new control cycle, in which the values of **t1** and **V1** will be the same as in the just completed control cycle, but in which the values of **t2** and **V2** may result in being different, for example, because of changes in fluid pressure.

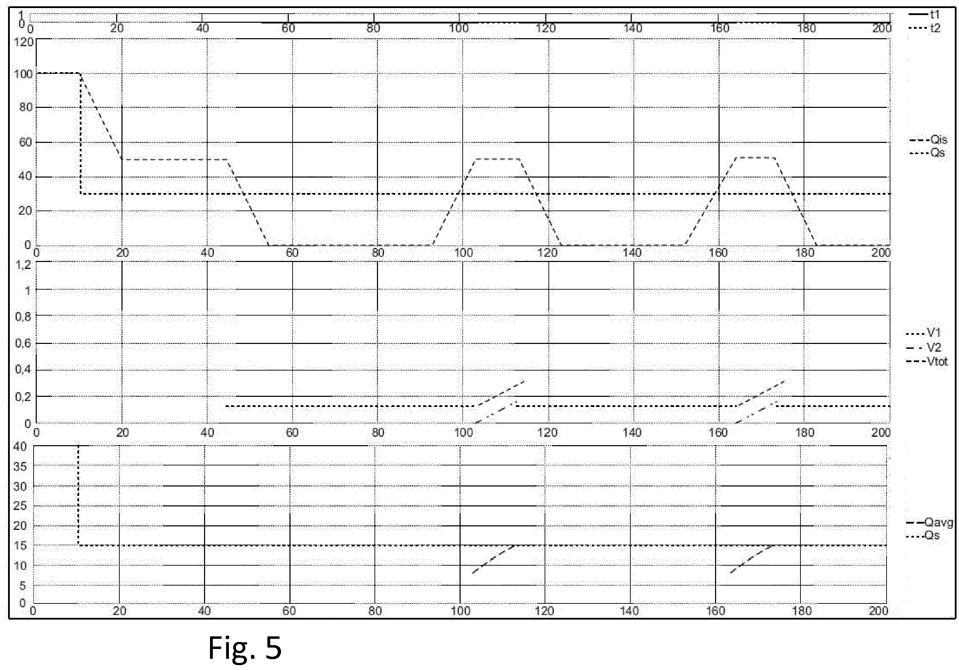

**Fig. 5** is another group of graphs illustrating an example of, inter alia, the flow rate through a valve body when a processing circuitry performs control cycles in accordance with at least some examples of this disclosure. The main difference between this group of graphs and the group of graphs shown in **Fig. 4** is that in **Fig. 4** the requested low flow rate **Qs** was higher, 30 l/h, whereas in **Fig. 5****,** the requested flow rate **Qs** is lower, 15 l/h.

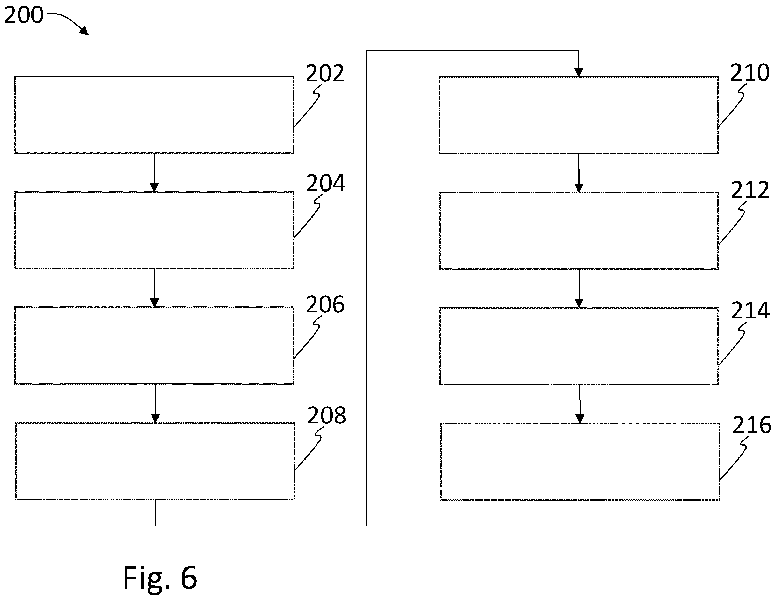

**Fig. 6** is a schematic illustration of a method **200** in accordance with at least some examples of this disclosure. In particular, there is illustrated a method **200** for controlling fluid flow in a flow control system which comprises:
- a valve arrangement comprising a valve body having an inlet and an outlet, and a closing member movable within the valve body and configured to control fluid flow from the inlet to the outlet, wherein the closing member is movable to:
   different open positions for providing different flow rates of the fluid flowing through the valve body from the inlet to the outlet, and
   a closed position, in which no fluid, or only a leakage fluid, is allowed to flow from the inlet to the outlet,
- a flow meter configured to measure the flow rate of the fluid flowing through the valve body, wherein a minimum measurable flow rate is predefined for the flow meter, such that any measurements by the flow meter at lower flow rates than said minimum measurable flow rate are determined to be inaccurate,
the method comprising:
- in an action **202,** receiving, by processing circuitry, from the flow meter, information representative of the measured flow rate,
- in an action **204** receiving, by the processing circuitry, a request for a requested low flow rate, which requested low flow rate is lower than said minimum measurable flow rate,
- in an action **206,** repeatedly performing, by the processing circuitry, control cycles in which the closing member is controlled so that an average flow rate of the fluid through the valve body substantially corresponds to said requested low flow rate, wherein each control cycle comprises:
   i) in an action in an action **208,** controlling, by the processing circuitry, the closing member to be moved in a direction towards the closed position until it reaches a waiting position, then
   ii) in an action **210,** controlling, by the processing circuitry, the closing member to remain in the waiting position, and then
   iii) in an action **212,** controlling, by the processing circuitry, the closing member to be moved in a direction away from the closed position until it reaches a measuring position at which the flow rate is equal to or larger than said minimum measurable flow rate, wherein the total time elapsed for performing the steps i), ii) and iii) is a first time period t1, and wherein a first volume V1 of fluid is estimated or calculated to pass through the valve body during said first time period t1, wherein t1 and V1 are fixed values, then
   iv) in an action **214,** controlling, by the processing circuitry, the closing member to be maintained at said measuring position while continuously integrating the measured flow rate through the valve body over a second time period t2, thereby obtaining a measure of a second volume V2 of fluid flowing through the valve body during the second time period t2, wherein t2 and V2 are variable values, and then
   v) in an action **216,** determining, by the processing circuitry, that the cycle is completed when (V1 + V2)/(t1 + t2) equals said requested low flow rate.

It should be understood that the actions **202** and **204** do not need to be performed in any particular order. For example, the two actions **202** and **204** may suitably be performed simultaneously.

## Claims

1. A flow control system, comprising:
- a valve arrangement comprising a valve body having an inlet and an outlet, and a closing member movable within the valve body and configured to control fluid flow from the inlet to the outlet, wherein the closing member is movable to:
different open positions for providing different flow rates of the fluid flowing through the valve body from the inlet to the outlet, and
a closed position, in which no fluid, or only a leakage fluid, is allowed to flow from the inlet to the outlet,
- a flow meter configured to measure the flow rate of the fluid flowing through the valve body, wherein a minimum measurable flow rate is predefined for the flow meter, such that any measurements by the flow meter at lower flow rates than said minimum measurable flow rate are determined to be inaccurate,
- processing circuitry configured to receive, from the flow meter, information representative of the measured flow rate, wherein the processing circuitry is configured to control the position of the closing member based on the received information, wherein the processing circuitry is configured to receive a request for a requested low flow rate, which requested low flow rate is lower than said minimum measurable flow rate,
wherein the processing circuitry is configured to repeatedly perform control cycles in which the closing member is controlled so that an average flow rate of the fluid through the valve body substantially corresponds to said requested low flow rate, wherein each control cycle comprises:
i) controlling the closing member to be moved in a direction towards the closed position until it reaches a waiting position, then
ii) controlling the closing member to remain in the waiting position, and then
iii) controlling the closing member to be moved in a direction away from the closed position until it reaches a measuring position at which the flow rate is equal to or larger than said minimum measurable flow rate, wherein the total time elapsed for performing the steps i), ii) and iii) is a first time period t1, and wherein a first volume V1 of fluid is estimated or calculated to pass through the valve body during said first time period t1, wherein t1 and V1 are fixed values, then
iv) controlling the closing member to be maintained at said measuring position while continuously integrating the measured flow rate through the valve body over a second time period t2, thereby obtaining a measure of a second volume V2 of fluid flowing through the valve body during the second time period t2, wherein t2 and V2 are variable values, and then
v) determining that the cycle is completed when (V1 + V2)/(t1 + t2) equals said requested low flow rate.

2. The flow control system according to claim 1, further comprising a thermoelectric actuator operatively connected to the closing member, wherein the thermoelectric actuator comprises an expandable material element which is expandable in dependency of electric energy applied to the expandable material element, wherein expansion of the expandable material element causes the closing member to move in one of
a) a direction towards the closed position, or
b) a direction away from the closed position,
and wherein contraction of the expandable material element causes the closing member to move in the other one of said direction towards the closed position or said direction away from the closed position, wherein the processing circuitry is configured to control the position of the closing member by controlling the electric energy applied to the expandable material element.

3. The flow control system according to any one of claims 1-2, further comprising a differential pressure regulator configured to limit variations of the differential pressure across the closing member when fluid is flowing through the valve body, the differential pressure regulator being in fluid communication with the fluid flow both upstream and downstream of the closing member.

4. The flow control system according to claim 3, wherein the measuring position is the same for each cycle.

5. The flow control system according to any one of claims 1-4, wherein said waiting position is said closed position of the closing member.

6. The flow control system according to any one of claims 1-5, wherein said measuring position is associated with a predetermined flow rate, wherein when the processing circuitry receives information from the flow meter that said predetermined flow rate has been reached, then the processing circuitry determines that said measuring position is the position of the closing member at which the predetermined flow rate has been reached.

7. The flow control system according to any one of claims 1-6, wherein said first action in the control cycle, i.e. i) controlling the closing member to be moved in a direction towards the closed position until it reaches a waiting position, is initiated when the closing member is located in said measuring position.

8. The flow control system according to any one of claims 1-7, wherein the first time period t1 is in the range of 60 - 90 seconds.

9. The flow control system according to any one of claims 1-8, wherein the second time period t2 is in the range of 3 - 300 seconds.

10. A method for controlling fluid flow in a flow control system which comprises:
- a valve arrangement comprising a valve body having an inlet and an outlet, and a closing member movable within the valve body and configured to control fluid flow from the inlet to the outlet, wherein the closing member is movable to:
different open positions for providing different flow rates of the fluid flowing through the valve body from the inlet to the outlet, and
a closed position, in which no fluid, or only a leakage fluid, is allowed to flow from the inlet to the outlet,
- a flow meter configured to measure the flow rate of the fluid flowing through the valve body, wherein a minimum measurable flow rate is predefined for the flow meter, such that any measurements by the flow meter at lower flow rates than said minimum measurable flow rate are determined to be inaccurate,
the method comprising:
- receiving, by processing circuitry, from the flow meter, information representative of the measured flow rate,
- receiving, by the processing circuitry, a request for a requested low flow rate, which requested low flow rate is lower than said minimum measurable flow rate,
- repeatedly performing, by the processing circuitry, control cycles in which the closing member is controlled so that an average flow rate of the fluid through the valve body substantially corresponds to said requested low flow rate, wherein each control cycle comprises:
i) controlling, by the processing circuitry, the closing member to be moved in a direction towards the closed position until it reaches a waiting position, then
ii) controlling, by the processing circuitry, the closing member to remain in the waiting position, and then
iii) controlling, by the processing circuitry, the closing member to be moved in a direction away from the closed position until it reaches a measuring position at which the flow rate is equal to or larger than said minimum measurable flow rate, wherein the total time elapsed for performing the steps i), ii) and iii) is a first time period t1, and wherein a first volume V1 of fluid is estimated or calculated to pass through the valve body during said first time period t1, wherein t1 and V1 are fixed values, then
iv) controlling, by the processing circuitry, the closing member to be maintained at said measuring position while continuously integrating the measured flow rate through the valve body over a second time period t2, thereby obtaining a measure of a second volume V2 of fluid flowing through the valve body during the second time period t2, wherein t2 and V2 are variable values, and then
v) determining, by the processing circuitry, that the cycle is completed when (V1 + V2)/(t1 + t2) equals said requested low flow rate.
